# EUROPÄISCHE PATENTANMELDUNG

(11) **EP 4 726 999 A1**
(43) Veröffentlichungstag der Anmeldung: **15.04.2026**
(21) Anmeldenummer: 25204146.2
(22) Anmeldetag: 23.09.2025
(51) Int. Cl.: H02P 3/22, H02P 29/024

(54) **SCHALTUNGSANORDNUNG ZUR ANSTEUERUNG EINES WECHSELRICHTERS FÜR EINE ELEKTROMASCHINE IN EINEM HOCHVOLTNETZ, HOCHVOLTNETZ UND VERFAHREN ZUR ANSTEUERUNG EINES WECHSELRICHTERS**

(30) Priorität: 09.10.2024 DE 102024209839
(71) Anmelder: Volkswagen Aktiengesellschaft, 38440 Wolfsburg (DE)
(72) Erfinder: Oelkers, Fabian, 31174 Dinklar (DE); Wirsen-Gümüser, Bjarne, 33098 Paderborn (DE); Brüske, Stephan, 85049 Ingolstadt (DE); Kraatz, Fabian, 38102 Braunschweig (DE)
(74) Vertreter: Zucker, Volker

(57) **Zusammenfassung**

Die Erfindung betrifft eine Schaltungsanordnung (9) zur Ansteuerung eines Wechselrichters (4) für eine Elektromaschine (5) in einem Hochvoltnetz (1), wobei das Hochvoltnetz (1) mindestens eine Hochvoltbatterie (2), mindestens einen Zwischenkreiskondensator (3), mindestens einen Wechselrichter (4) und mindestens ein Schaltelement (6) aufweist, wobei der mindestens eine Zwischenkreiskondensator (3) parallel zu einem Gleichspannungseingang des Wechselrichters (4) angeordnet ist und das Schaltelement (6) zwischen Hochvoltbatterie (2) und Zwischenkreiskondensator (3) angeordnet ist, wobei die Schaltungsanordnung (9) einen Prozessor (10), einen ersten Komparator (14) und einen zweiten Komparator (15) aufweist, wobei der erste Komparator (14) ein Schaltsignal für einen aktiven Kurzschluss (AKS) erzeugt, wenn eine Spannung (UDC) am Zwischenkreiskondensator (3) größer als eine feste erste Referenzspannung (Uref1) ist, wobei zweite Komparator (15) ein Schaltsignal für einen Freilauf (FL) erzeugt, wenn die Spannung (UDC) am Zwischenkreiskondensator (3) größer als eine zweite Referenzspannung (Uref2) ist, wobei der Prozessor (10) derart ausgebildet ist, die zweite Referenzspannung (Uref2) adaptiv mindestens in Abhängigkeit eines Arbeitspunktes (AP) der Elektromaschine (5) anzupassen, wobei die Schaltungsanordnung (9) weiter derart ausgebildet ist, das Schaltsignal für den Freilauf (FL) nur dann durchzuschalten, wenn kein Schaltsignal für den aktiven Kurzschluss (AKS) vorliegt, ein Hochvoltnetz (1) und ein Verfahren.

## Beschreibung

Die Erfindung betrifft eine Schaltungsanordnung zur Ansteuerung eines Wechselrichters für eine Elektromaschine in einem Hochvoltnetz, ein Hochvoltnetz zur Ansteuerung eines Wechselrichters und ein Verfahren zur Ansteuerung eines Wechselrichters.

Bei elektrischen Maschinen kann es erforderlich sein, bei einem Auftreten eines Fehlers in der elektrischen Maschine oder in einer die elektrische Maschine umfassenden Vorrichtung ein umgehendes Abschalten der sich im Betrieb befindlichen elektrischen Maschine zu ermöglichen. Ein derartiger Fehlerfall kann zum Beispiel vorliegen, wenn ein Lastabwurf (durch Öffnen der Schaltelemente bzw. Schütze an einer Hochvoltbatterie) auftritt oder wenn eine elektrische Maschine umfassende Vorrichtung, beispielsweise ein die elektrische Maschine als Traktionsmotor umfassendes Kraftfahrzeug, einen Fehlerzustand feststellt, beispielsweise infolge eines Bauteilausfalls, eines Software-Fehlers oder ähnlichen Fehlers. Für einen derartigen Abschaltvorgang ist es erforderlich, dass neben weiteren elektrischen Komponenten auch die elektrische Maschine in einen sicheren Zustand überführt wird. Dazu müssen Maßnahmen durchgeführt werden, welche insbesondere ein Herunterfahren einer Betriebsspannung der elektrischen Maschine bewirken. Dabei sind Sprünge im Drehmoment der elektrischen Maschine und/oder abrupte Bremsmomente zu vermeiden.

Zum Erreichen des sicheren Zustandes können insbesondere ein aktiver Kurzschluss oder ein Freilauf der elektrischen Maschine geschaltet werden. Welches dieser Mittel sich dabei eignet, kann von dem Maschinentyp der elektrischen Maschine abhängen, also zum Beispiel davon, ob es sich um eine Asynchronmaschine oder eine Synchronmaschine handelt. Aus dem Stand der Technik sind verschiedene Verfahren zum Schalten einer elektrischen Maschine in einen Freilauf oder in einen aktiven Kurzschluss bekannt.

In DE 10 2014 209 887 A1 wird ein Verfahren zum Schalten eines Wechselrichters eines elektrischen Antriebs eines Kraftfahrzeugs beschrieben. Dabei kann durch den Wechselrichter ein Freilauf-Betriebsmodus, ein Kurzschluss-Betriebsmodus und ein getakteter Betriebsmodus zum Betrieb der elektrischen Maschine eingestellt werden. Ein Umschalten zwischen den Betriebsmodi erfolgt dabei in Abhängigkeit eines ermittelten Spannungswerts und/oder eines ermittelten Stromwerts für den aktuellen Betriebsmodus, wobei ein Anpassungsvorgang in Abhängigkeit des ermittelten Spannungswerts und/oder des ermittelten Stromwerts zur Anpassung des Stroms und/oder Spannung in der elektrischen Maschine für den Zielbetriebsmodus erfolgt.

Dabei wird beim Übergang von dem Freilauf-Betriebsmodus in den Kurzschluss-Betriebsmodus zunächst ein Stromregler des Wechselrichters für eine kurze Zeit mit einer Stromsollwertvorgabe von null betrieben, wobei während dieser Zeit ein Spannungswert und/oder ein Stromwert für den aktuellen Betriebsmodus ermittelt werden. Innerhalb dieser Zeit kann die Spannung an der elektrischen Maschine stufenweise auf null gesenkt werden, wobei anschließend die Taktung des Wechselrichters mit einem Schalten des Wechselrichters in den Kurzschluss-Betriebsmodus beendet wird. Dadurch können Spannungsdifferenzen bzw. Stromdifferenzen zwischen dem aktuellen Betriebsmodus und dem Zielbetriebsmodus ausgeglichen werden und transiente Überströme bzw. Überspannungen reduziert oder verhindert werden.

DE 10 2013 226 560 A1 offenbart ein Verfahren für einen verbesserten Wechsel von einem Freilaufbetrieb in einen aktiven Kurzschluss einer elektrischen Maschine. Dabei wird der Wechsel von dem Freilauf in den aktiven elektrischen Kurzschluss solange verzögert, bis eine elektrische Spannung an den Anschlüssen der elektrischen Maschine einen vorbestimmten Wert aufweist. Auf diese Weise wird erreicht, dass das Umschalten in Abhängigkeit einer durch die bestimmte Spannung ermittelten Rotorlage erfolgen kann.

Aus der DE 10 2021 129 144 A1 ist ein Verfahren zum Betreiben einer elektrischen Schaltungsanordnung, umfassend eine elektrische Schaltung und eine elektrische Maschine, bekannt, wobei bei Erfüllung wenigstens eines Auslösekriteriums die elektrische Maschine über die elektrische Schaltung in einen Freilauf geschaltet wird, wonach in Abhängigkeit wenigstens eines eine Statorstromänderung in der elektrischen Maschine beschreibenden Messwertes für die Zeitdauer im Freilauf betrieben wird und anschließend über die elektrische Schaltung in einen aktiven Kurzschluss geschaltet wird.

Ein solches adaptives Einstellen der Freilaufzeit in Abhängigkeit eines Parameters erfolgt typischerweise über einen Mikrocontroller des Wechselrichters. Da aber die elektrische Maschine auch bei Ausfall des Mikrocontrollers selbst in einen sicheren Zustand geschaltet werden muss, ist es auch bekannt, in diesem Fall eine Umschaltung über eine reine HardwareSchaltung vorzunehmen. Dabei wird die Zeit bis zum Umschalten für ein Worst-Case-Szenario dimensioniert, sodass die Freilaufzeit sehr gering ist und dadurch die Ströme im aktiven Kurzschluss noch sehr groß sein können. Andererseits ist so sichergestellt, dass trotz Ausfall des Mikrocontrollers und gegebenenfalls verschiedener Messeinrichtungen die elektrische Maschine noch in einem sicheren Betriebszustand überführt werden kann.

Ein Lastabwurf (auch als Load Dump bekannt), also das Öffnen mindestens eines Schaltelementes zwischen Hochvoltbatterie und Wechselrichter, kann verschiedene Gründe haben, beispielsweise ein Crash-Signal oder Messwerte der Hochvoltbatterie. Daher kann der Lastabwurf also dauerhaft oder nur zeitweise sein. Dabei muss auch beim Lastabwurf entsprechend schnell reagiert werden, da ansonsten insbesondere beim Rekuperationsbetrieb große Energiemengen in den Zwischenkreiskondensator zurückgespeist werden, die zu extrem hohen Spannungen führen können. Eine Signalisierung eines bevorstehenden Lastabwurfs (z. B. durch ein Airbag-Steuergerät im Falle eines Crashs oder ein Batteriemanagement-Steuergerät) benötigt dabei jedoch einige Zeit, weswegen der geregelte Rekuperationsbetrieb möglicherweise nicht schnell genug verlassen werden kann, um ein kontinuierliches Aufladen des Zwischenkreiskondensators über eine kritische Spannung hinaus zu vermeiden

Der Erfindung liegt das technische Problem zugrunde, eine Schaltungsanordnung zur Ansteuerung eines Wechselrichters für eine Elektromaschine in einem Hochvoltnetz zu schaffen, die bei einem Lastabwurf schnell geeignete Maßnahmen einleitet. Ein weiteres technisches Problem ist die Schaffung eines geeigneten Hochvoltnetzes und ein geeignetes Verfahren zur Ansteuerung eines Wechselrichters zur Verfügung zu stellen.

Die Lösung des technischen Problems ergibt sich durch eine Schaltungsanordnung mit den Merkmalen des Anspruchs 1, ein Hochvoltnetz mit den Merkmalen des Anspruchs 6 und ein Verfahren mit den Merkmalen des Anspruchs 7. Weitere vorteilhafte Ausgestaltungen der Erfindung ergeben sich aus den Unteransprüchen.

Die Schaltungsanordnung zur Ansteuerung eines Wechselrichters für eine Elektromaschine in einem Hochvoltnetz, wobei das Hochvoltnetz mindestens eine Hochvoltbatterie, mindestens einen Zwischenkreiskondensator, mindestens einen Wechselrichter und mindestens ein Schaltelement aufweist, wobei der mindestens eine Zwischenkreiskondensator parallel zu einem Gleichspannungseingang des Wechselrichters angeordnet ist und das Schaltelement zwischen Hochvoltbatterie und Zwischenkreiskondensator angeordnet ist, weist einen Prozessor, einen ersten Komparator und einen zweiten Komparator auf. Der erste Komparator ist derart ausgebildet, ein Schaltsignal für einen aktiven Kurzschluss zu erzeugen, wenn eine Spannung am Zwischenkreiskondensator größer als eine feste Referenzspannung ist. Die feste Referenzspannung ist derart gewählt, dass diese (möglichst knapp) unterhalb von maximal verträglichen Spannungen für die Bauelemente liegt. Der zweite Komparator ist derart ausgebildet, ein Schaltsignal für einen Freilauf zu erzeugen, wenn die Spannung am Zwischenkreiskondensator größer als eine zweite Referenzspannung ist. Die zweite Referenzspannung ist kleiner als die erste Referenzspannung. Weiter ist der Prozessor derart ausgebildet, die zweite Referenzspannung adaptiv mindestens in Abhängigkeit von einem Arbeitspunkt der Elektromaschine anzupassen. Weiter ist die Schaltungsanordnung derart ausgebildet, das Schaltsignal für den Freilauf nur dann durchzuschalten, wenn kein Schaltsignal für den aktiven Kurzschluss vorliegt. Die Schaltungsanordnung ist sehr schnell, da die Komparatoren reine Hardware-Elemente sind. Der Grundgedanke der Erfindung ist, dass sich ein Lastabwurf durch schnelle Spannungsänderungen am Zwischenkreiskondensator detektieren lässt, wobei versucht wird, solange wie möglich im Fall des Lastabwurfs im Freilauf zu bleiben und nur im äußersten Fall (Spannung größer erste Referenzspannung) in den aktiven Kurzschluss zu schalten. Durch die adaptive Anpassung der zweiten Referenzspannung kann ein größerer Spannungsbereich gehandhabt werden, als wenn die zweite Referenzspannung fest eingestellt wäre. Dabei wird die zweite Referenzspannung mindestens in Abhängigkeit eines Arbeitspunktes der Elektromaschine eingestellt. Durch die Berücksichtigung des Arbeitspunktes kann eine Welligkeit der Spannung aufgrund der Arbeitsweise des Wechselrichters (der typischerweise ein Pulswechselrichter ist) abgeschätzt werden sowie eine Spannungsänderung abgeschätzt werden (im Rekuperationsbetrieb ist mit steigenden Spannungen zu rechnen, im motorischen Betrieb mit eher sinkenden bzw. gleichbleibenden Spannungen). Steigt dann die Spannung über die adaptive zweite Referenzspannung, so ist dies ein Indiz dafür, dass ein Lastabwurf erfolgt ist und die Hochvoltbatterie im Rekuperationsbetrieb als Energiesenke weggefallen ist. Der Wechselrichter wird dann solange im Freilauf betrieben bis die erste Referenzspannung überschritten wird (aktiver Kurzschluss) oder ein Initialisierungssignal gesendet wird. Beispielsweise kann das Initialisierungssignal durch einen erneuten Motorstart oder durch einen Kundendienst erzeugt werden. Neben dem Arbeitspunkt der Elektromaschine kann die zweite Referenzspannung zusätzlich in Abhängigkeit der Spannung am Zwischenkreiskondensator angepasst werden. Weiter können zusätzlich oder ergänzend auch die aktuelle Taktfrequenz und/oder das aktuelle Modulationsverfahren im Wechselrichter berücksichtigt werden.

In einer Ausführungsform weist die Schaltungsanordnung einen dritten Komparator auf, wobei der dritte Komparator ein Schaltsignal für einen Freilauf erzeugt, wenn die Spannung am Zwischenkreiskondensator kleiner als eine dritte Referenzspannung ist. Die dritte Referenzspannung kann derart gewählt werden, dass bei dieser kein ordnungsgemäßer Betrieb des Wechselrichters mehr möglich ist. Hierdurch werden Fälle abgefangen, wo der Wechselrichter im motorischen Betrieb ist und durch den Lastabfall die gesamte Energie aus dem Zwischenkreiskondensator kommen muss, der sich dann entsprechend schnell entlädt.

In einer weiteren Ausführungsform ist die dritte Referenzspannung eine feste Referenzspannung.

In einer weiteren Ausführungsform weist der Prozessor eingangsseitig einen Tiefpassfilter auf, so dass die Spannungssignale vom Zwischenkreiskondensator geglättet bzw. gemittelt werden, so dass hochfrequente bzw. höherfrequente Schwankungen bei der Bildung der zweiten Referenzspannung unterdrückt werden.

In einer weiteren Ausführungsform ist der Prozessor über eine SPI-Schnittstelle (Serial Peripheral Interface) mit dem zweiten Komparator verbunden, die sehr schnell und robust ist.

Das Hochvoltnetz umfasst eine Hochvoltbatterie, mindestens einen Zwischenkreiskondensator, mindestens einen Wechselrichter, mindestens eine Elektromaschine und mindestens ein Schaltelement, wobei der mindestens eine Zwischenkreiskondensator parallel zu einem Gleichspannungseingang des Wechselrichters angeordnet ist und das Schaltelement zwischen der Hochvoltbatterie und dem Zwischenkreiskondensator angeordnet ist, wobei das Hochvoltnetz mindestens eine zuvor beschriebene Schaltungsanordnung zur Ansteuerung des Wechselrichters aufweist. Die Elektromaschine ist vorzugsweise eine Synchronmaschine.

Das Verfahren zur Ansteuerung eines Wechselrichters erfolgt mittels einer zuvor beschriebenen Schaltungsanordnung, wobei bei einem Last-Abwurf durch Öffnung des mindestens einen Schaltelementes die Schaltungsanordnung ein Schaltsignal für einen aktiven Kurzschluss oder einen Freilauf erzeugt.

Die Erfindung wird nachfolgend anhand eines bevorzugten Ausführungsbeispieles näher erläutert. Die Figuren zeigen:
- Fig. 1: ein schematisches Blockschaltbild eines Hochvoltnetzes,
- Fig. 2: eine schematische Darstellung einer Schaltungsanordnung zur Ansteuerung eines Wechselrichters.

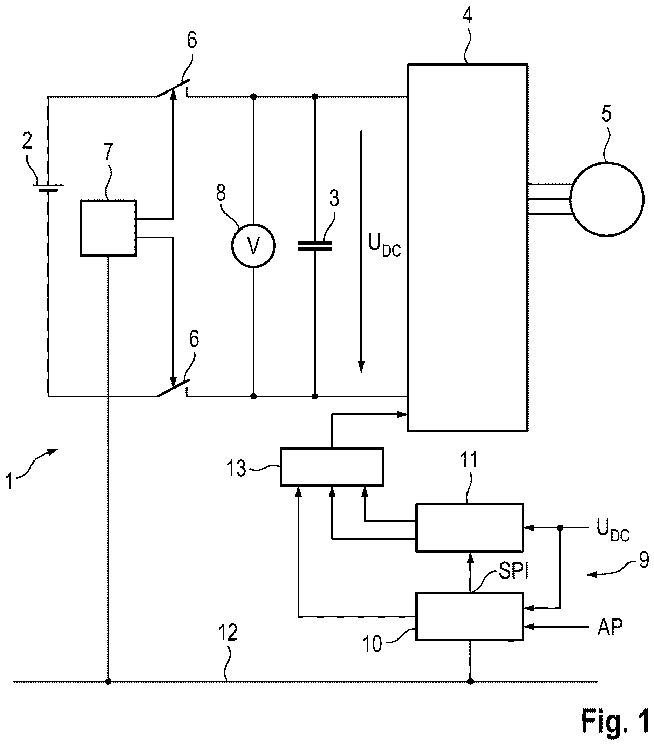

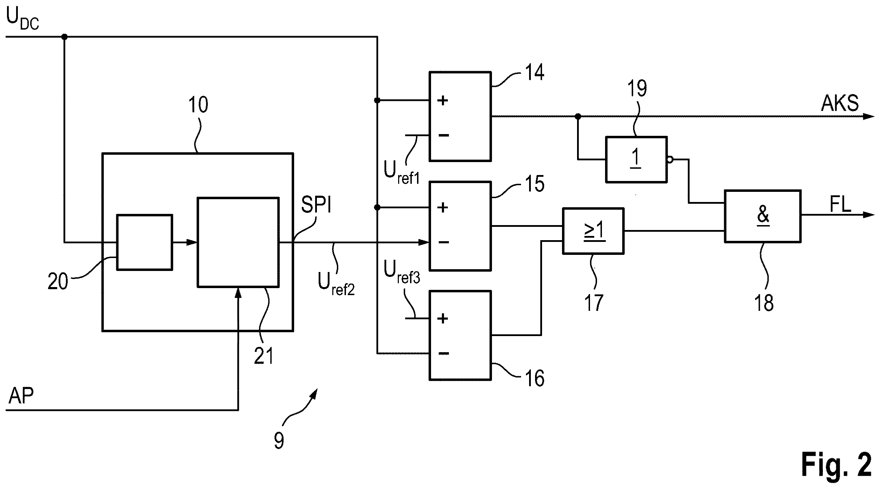

In der Fig. 1 ist schematisch ein Hochvoltnetz 1 eines Kraftfahrzeuges dargestellt. Das Hochvoltnetz 1 weist eine Hochvoltbatterie 2, einen Zwischenkreiskondensator 3, einen Wechselrichter 4 und eine Elektromaschine 5 auf. Der Zwischenkreiskondensator 3 ist parallel zu einem Gleichspannungseingang des Wechselrichters 4 angeordnet, wobei an dessen Wechselspannungsausgang die Elektromaschine 5 angeordnet ist. Zwischen der Hochvoltbatterie 2 und dem Zwischenkreiskondensator 3 sind zwei Schaltelemente 6 angeordnet, mittels derer die Hochvoltbatterie 2 allpolig vom übrigen Hochvoltnetz getrennt werden kann. Die Schaltelemente 6 sind beispielsweise als Schütze ausgebildet, können aber auch Halbleiterschalter sein. Weiter dargestellt ist ein Batteriemanagement-Steuergerät 7, das unter anderem die Schaltelemente 6 ansteuert. Dem Zwischenkreiskondensator 3 ist eine Spannungsmesseinrichtung 8 zugeordnet. Weiter weist das Hochvoltnetz 1 eine Schaltungsanordnung 9 zur Ansteuerung des Wechselrichters 4 auf. Die Schaltungsanordnung 9 weist einen Prozessor 10 und eine Hardwareschaltung 11 auf. Der Prozessor 10 ist vorzugsweise ein Mikroprozessor, der über ein Bussystem 12 unter anderem mit dem Batteriemanagement-Steuergerät 7 verbunden ist. Der Prozessor 10 erzeugt im regulären Betrieb in Abhängigkeit von gewünschten Arbeitspunkten AP der Elektromaschine 5 Steuersignale für Gate-Treiber 13, die dann nicht dargestellte Leistungshalbleiter des Wechselrichters 4 ansteuern. Im Fall eines Lastabwurfs durch Öffnung der Schaltelemente 6 erzeugt hingegen die Hardwareschaltung 11 ein Signal für einen aktiven Kurzschluss AKS oder einen Freilauf FL, der von den Gate-Treibern 13 oder einer anderen Schaltung umgesetzt wird. Dabei sind der Prozessor 10 und die Hardwareschaltung 11 über eine SPI-Schnittstelle SPI miteinander verbunden. Die Funktionsweise der Schaltungsanordnung 9 für den Lastabwurf soll nun anhand von Fig. 2 erläutert werden. Dabei ist in Fig. 2 der Prozessor 10 und die Hardwareschaltung 11 dargestellt.

Die Hardwareschaltung 11 umfasst einen ersten Komparator 14, einen zweiten Komparator 15 und einen dritten Komparator 16. Die Ausgänge des zweiten Komparators 15 und des dritten Komparators 16 sind auf ein Oder-Gatter 17 geführt. Dabei weisen die Ausgänge der Komparatoren 14-16 eine Haltefunktion auf (z.B. mittels Latch-Gatters), um sicherzustellen, dass bei einem Absinken der Spannung U_{DC} ein Zwischenkreiskondensator das Signal für den aktiven Kurzschluss oder den Freilauf nicht gelöscht wird, sondern der aktive Kurzschluss oder der Freilauf aufrechterhalten bleiben. Der Ausgang des Oder-Gatters 17 ist auf einen Eingang eines Und-Gatters 18 geführt. An dem anderen Eingang des Und-Gatters 18 liegt der über einen Inverter 19 invertierte Ausgang des ersten Komparators 14 an. Am ersten Komparator 14 und am zweiten Komparator 15 liegt jeweils die Spannung U_{DC} am Zwischenkreiskondensator 3 an dem positiven Eingang an, wobei am negativen Eingang eine erste Referenzspannung U_{ref1} bzw. eine zweite Referenzspannung U_{ref2} anliegt. Am positiven Eingang des dritten Komparators 16 liegt eine dritte Referenzspannung U_{ref3} an und am negativen Eingang liegt die Spannung U_{DC} am Zwischenkreiskondensator 3 an.

Der Prozessor 10 weist eingangsseitig einen Tiefpassfilter 20 für die Spannung U_{DC} auf, dem eine Berechnungseinheit 21 nachgeschaltet ist, die die zweite Referenzspannung U_{ref2} dynamisch in Abhängigkeit der gefilterten Spannung U_{DC} und einem Arbeitspunkt AP der Elektromaschine 5 ermittelt. Dabei wird die zweite Referenzspannung U_{ref2} derart festgelegt, dass die schwankende Spannung U_{DC} im aktuellen Arbeitspunkt kleiner als die zweite Referenzspannung U_{ref2} ist, wobei zusätzlich Toleranzen für einen abrupten Wechsel des Arbeitspunktes AP berücksichtigt werden.

Die erste Referenzspannung U_{ref1} und die dritte Referenzspannung U_{ref3} sind hingegen fest.

Im Lastabwurf sind nun prinzipiell zwei Fälle zu unterscheiden, nämlich dass die Elektromaschine 5 im Rekuperationsbetrieb oder motorischen Betrieb ist. Im Rekuperationsbetrieb kann die Spannung U_{DC} am Zwischenkreiskondensator 3 schnell und stark ansteigen, da die Energie aufgrund der offenen Schaltelemente 6 nicht von der Hochvoltbatterie 2 aufgenommen werden kann. Als Folge übersteigt die Spannung U_{DC} die zweite Referenzspannung U_{ref2} und am Ausgang des zweiten Komparators 15 wird eine logische 1 erzeugt, die auch am Ausgang des Oder-Gatters 17 anliegt. Solange die Spannung U_{DC} die erste Referenzspannung U_{ref1} übersteigt, liegt am Ausgang des ersten Komparators 14 eine logische 0 an, die über den Inverter 19 invertiert wird, so dass am Eingang des Und-Gatters 18 zwei logische 1en anliegen und am Ausgang des Und-Gatters eine logische 1 für ein Freilaufsignal FL erzeugt wird. Entsprechend wird der Wechselrichter 4 in den Freilauf geschaltet. Sollte die Spannung U_{DC} weiter steigen und die erste Referenzspannung U_{ref1} überschreiten, so erzeugt der erste Komparator 14 am Ausgang eine logische 1 und es wird ein Signal für einen aktiven Kurzschluss AKS erzeugt. Der Inverter 19 invertiert dieses Signal, so dass am Und-Gatter 18 eine logische 0 anliegt, so dass auch am Ausgang eine logische 0 ist und kein Freilaufsignal FL mehr erzeugt wird. Somit wird verhindert, dass gleichzeitig ein Signal für einen aktiven Kurzschluss AKS und ein Signal für einen Freilauf FL anliegen. Wenn der Wechselrichter 4 einmal in den aktiven Kurzschluss geschaltet wurde, so verbleibt dieser in diesem Zustand, bis über ein Initialisierungssignal dieser Zustand zurückgesetzt wird. Im motorischen Betrieb der Elektromaschine 5 wird die gesamte Energie vom Zwischenkreiskondensator 3 zur Verfügung gestellt, so dass die Spannung U_{DC} schnell sinkt. Unterschreitet dann die Spannung U_{DC} die dritte Referenzspannung U_{ref3}, so wird ein Signal für den Freilauf FL erzeugt. Die drei Komparatoren 14 - 16 können dabei auch in einem gemeinsamen Chip untergebracht werden.

### Bezugszeichenliste

- 1: Hochvoltnetz
- 2: Hochvoltbatterie
- 3: Zwischenkreiskondensator
- 4: Wechselrichter
- 5: Elektromaschine
- 6: Schaltelemente
- 7: Batteriemanagement-Steuergerät
- 8: Spannungsmesseinrichtung
- 9: Schaltungsanordnung
- 10: Prozessor
- 11: Hardwareschaltung
- 12: Bussystem
- 13: Gate-Treiber
- 14: Komparator
- 15: Komparator
- 16: Komparator
- 17: Oder-Gatter
- 18: Und-Gatter
- 19: Inverter
- 20: Tiefpassfilter
- 21: Berechnungseinheit
- AKS: aktiver Kurzschluss
- AP: Arbeitspunkt
- FL: Freilauf
- SPI: SPI-Schnittstelle
- U_{DC}: Spannung
- U_{ref1}: Referenzspannung
- U_{ref2}: Referenzspannung
- U_{ref3}: Referenzspannung

## Patentansprüche

1. Schaltungsanordnung (9) zur Ansteuerung eines Wechselrichters (4) für eine Elektromaschine (5) in einem Hochvoltnetz (1), wobei das Hochvoltnetz (1) mindestens eine Hochvoltbatterie (2), mindestens einen Zwischenkreiskondensator (3), mindestens einen Wechselrichter (4) und mindestens ein Schaltelement (6) aufweist, wobei der mindestens eine Zwischenkreiskondensator (3) parallel zu einem Gleichspannungseingang des Wechselrichters (4) angeordnet ist und das Schaltelement (6) zwischen Hochvoltbatterie (2) und Zwischenkreiskondensator (3) angeordnet ist, wobei die Schaltungsanordnung (9) einen Prozessor (10), einen ersten Komparator (14) und einen zweiten Komparator (15) aufweist, wobei der erste Komparator (14) ein Schaltsignal für einen aktiven Kurzschluss (AKS) erzeugt, wenn eine Spannung (U_{DC}) am Zwischenkreiskondensator (3) größer als eine feste erste Referenzspannung (U_{ref1}) ist, wobei zweite Komparator (15) ein Schaltsignal für einen Freilauf (FL) erzeugt, wenn die Spannung (U_{DC}) am Zwischenkreiskondensator (3) größer als eine zweite Referenzspannung (U_{ref2}) ist, wobei der Prozessor (10) derart ausgebildet ist, die zweite Referenzspannung (U_{ref2}) adaptiv mindestens in Abhängigkeit der eines Arbeitspunktes (AP) der Elektromaschine (5) anzupassen, wobei die Schaltungsanordnung (9) weiter derart ausgebildet ist, das Schaltsignal für den Freilauf (FL) nur dann durchzuschalten, wenn kein Schaltsignal für den aktiven Kurzschluss (AKS) vorliegt.

2. Schaltungsanordnung nach Anspruch 1, **dadurch gekennzeichnet, dass** die Schaltungsanordnung (9) einen dritten Komparator (16) aufweist, wobei der dritte Komparator (16) ein Schaltsignal für einen Freilauf (FL) erzeugt, wenn die Spannung (U_{DC}) am Zwischenkreiskondensator (3) kleiner als eine dritte Referenzspannung (U_{ref3}) ist.

3. Schaltungsanordnung nach Anspruch 2, **dadurch gekennzeichnet, dass** die dritte Referenzspannung (U_{ref3}) eine feste Referenzspannung ist.

4. Schaltungsanordnung nach einem der vorangegangenen Ansprüche, **dadurch gekennzeichnet, dass** der Prozessor (10) eingangsseitig mindestens einen Tiefpassfilter (20) aufweist.

5. Schaltungsanordnung nach einem der vorangegangenen Ansprüche, **dadurch gekennzeichnet, dass** der Prozessor (10) über eine SPI-Schnittstelle (SPI) mit dem zweiten Komparator (15) verbunden ist.

6. Hochvoltnetz (1), umfassend mindestens eine Hochvoltbatterie (2), mindestens einen Zwischenkreiskondensator (3), mindestens einen Wechselrichter (4), mindestens eine Elektromaschine (5) und mindestens ein Schaltelement (6), wobei der mindestens eine Zwischenkreiskondensator (3) parallel zu einem Gleichspannungseingang des Wechselrichters (4) angeordnet ist und das Schaltelement (6) zwischen der Hochvoltbatterie (2) und dem Zwischenkreiskondensator (3) angeordnet ist, wobei das Hochvoltnetz (1) mindestens eine Schaltungsanordnung (9) zur Ansteuerung des Wechselrichters (4) nach einem der Ansprüche 1 bis 5 aufweist.

7. Verfahren zur Ansteuerung eines Wechselrichters (4) mittels einer Schaltungsanordnung nach einem der Ansprüche 1 bis 5, wobei bei einem Lastabwurf durch Öffnung des mindestens einen Schaltelementes (6) die Schaltungsanordnung (9) ein Schaltsignal für einen aktiven Kurzschluss (AKS) oder einen Freilauf (FL) erzeugt.
